(19) Europäisches Patentamt

European Patent Office

Office européen des brevets

(11) **EP 1 406 212 A1**

(12) **EUROPEAN PATENT APPLICATION**

(43) Date of publication:
**07.04.2004 Bulletin 2004/15**

(51) Int Cl.$^7$: **G06T 9/00**

(21) Application number: **03386021.4**

(22) Date of filing: **23.09.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **25.09.2002 GR 2002100423**

(71) Applicant: **Lazaridis, Pavlos**
**54640 Thessaloniki (GR)**

(72) Inventor: **Lazaridis, Pavlos**
**54640 Thessaloniki (GR)**

(54) **Signal compression method using the discrete orthogonal Gauss-Hermite transform**

(57) Abstract : Method for the compression of sound, pictures, moving pictures, biomedical signals etc. using in place of the discrete cosine transform (DCT) the discrete orthogonal Gauss-Hermite transform (DOGHT). The latter expands the signals on a basis of Gauss-Hermite functions instead of the cosine functions and leads, in many practical cases, to 2-3 times better compression for the same reconstruction error as the DCT. This is achieved because the DOGHT transform of the invention combines the advantages of the DCT transform and the advantages of the transforms which are based on wavelet expansions.

EP 1 406 212 A1

**Description**

Introduction - prior art

There is today a big demand for the compression of digital sound, picture, video, biomedical, etc. signals in order to facilitate their storage e.g. in CD-ROMs or hard disks of reasonable capacity but more importantly in order to facilitate their (wireless) transmission through limited bandwidth channels. Thus, an average Internet link through a simple telephone line and a modem offers a maximum data transfer rate of 56 Kbits/sec = 7 Kbytes/sec while a wireless link through GSM/GPRS offers a data transfer rate of approximately 40 Kbits/sec = 5 Kbytes/sec.

On the other hand, the size of an uncompressed music file (.wav) is 44.1 KHz (sampling rate in thousands of samples per second)* 16 bits (quantisation of each sample in $2^{16}$ = 65 536 levels)*2 (stereo = 2 channels) = 1.4 Mbits/ sec. Thus, for a song that lasts 4 minutes, a storage space of 4x60secsx1.4 Mbits/sec = 336 Mbits = 42 Mbytes is needed. For an uncompressed picture file of the bitmap (.bmp) type and VGA 640x480 pixel resolution, like the ones that are produced e.g. from the digital cameras of some mobile phones, it is needed 640x480 pixels x 24 bits/pixel (true color, i.e. quantisation in $2^{24}$ = 16.7 million colours) = 7.4 Mbits, i.e. approximately 900 Kbytes.

Furthermore, video signals consist of typically 25 pictures (frames) per second thus making the storage of even a few minutes of uncompressed video signal very difficult.

In this way, for the transmission of the above mentioned uncompressed music file .wav through the Internet it is needed 42000 Kbytes/(7 Kytes/sec) = 1h40mins while for the above mentioned uncompressed picture file .bmp it is needed 900 Kbytes/(7 Kbytes/sec) = 2 min 10 secs. Evidently, the above transmission times for uncompressed sound and picture signals are very long and in the case of moving pictures (video) the transmission times are prohibitively long.

Therefore, during the last 12 years many signal compression algorithms were proposed. The most widespread and normalised algorithms that constitute international standards are: JPEG (Joint Photographic Expert Group) for the compression of still picture since 1991 and MPEG (Moving Picture Expert Group) for the compression of moving pictures (video) and sound since 1992. More precisely, the simplest compression algorithm standard was presented in 1992 while the more complicated and enhanced subsequent versions are MPEG-2 (presented in 1994) and MPEG-4 (presented in 1996). For the sound compression the algorithm that is used is MPEG Layer 3 or MP3 that is included in the general MPEG video standard. Moreover, the JPEG algorithm is also widely used for the storage (e.g. in digital photographic cameras) and the transmission of still pictures through the Internet, GPRS, etc. Furthermore, since 1997 (the year that free MP3 codecs made their first appearance on the Internet), there has been a tremendous increase in the use of the MP3 sound compression standard for the exchange of songs.

The basic ingredient and "heart" of all the above mentioned compression methods is the Discrete Cosine Transform - DCT, cf. 'Discrete Cosine Transform', N. Ahmed, T. Natarajan, K.R. Rao , IEEE Transactions on Computers, No. 1, vol. C-23, pp. 90-93, Jan. 1974, for which there exist since many years dedicated integrated circuits for its computation, cf. for example 'Image compression using DCT', Electronic Engineering, vol. 61, No. 751, July 1989.

The MP3 and JPEG algorithms use respectively the DCT transform with N = 18 points and the 2-dimensional DCT with 8x8 = 64 points. These algorithms lead to a compression of about 10 times without any noticeable quality degradation. In this way, the 4 minute song of the above example is compressed with a data rate of 128 Kbits/sec (compression of 11 times) and is stored in about 4 Mbytes of memory. It is sent through the Internet in 9 minutes. The VGA picture of the above example is stored in compressed form in approximately 90 Kbytes of memory without any noticeable degradation (compression of 10 times) and is sent through the Internet in 13 seconds. However, in this case, and taking into account that the original picture is not of a very high quality, a higher compression is possible but quality degradation becomes visible.

Observations and experiments that were made during the last decade with the sound and picture compression standards MP3 and JPEG have shown that the distortion-free limit of '10 times compression' is mainly due to the DCT transform that is common in the two methods. Hence, in the quest for even higher compression ratios than the 1:10 and particularly wanting to achieve a less abrupt increase of picture distortion for the high compression ratios (e.g. 1: 100) it was proposed to replace the DCT by the DWT (Discrete Wavelet Transform). The latter is using wavelet basis functions in place of the cosine basis functions, cf. 'Image coding using the wavelet transform', M. Antonini, M. Barlaud, P. Mathieu, I. Daubechies, IEEE Trans. On Image Processing, vol. 1, pp. 205-220, April 1992. In this way, appeared the most recent standard for compression of still pictures known as JPEG2000 (.jp2) since 2000, cf. 'JPEG2000 : The new still picture compression standard', C.A. Christopoulos, T. Ebrahimi, A.N. Skodras, pp. 45-49, ACM Multimedia Workshop, Marina del Rey CA, USA, 2000. This compression algorithm achieves on average 30 % better compression than the JPEG algorithm, and this becomes visible especially at the higher compression ratios.

However, the need for even higher compression ratios in all the above mentioned applications of sound, picture, video, etc. remains and especially there is a need for relatively simple algorithms of reasonable computational complexity.

The DOGHT algorithm proposed by this invention can replace the above mentioned DCT and DWT transforms, shows better performance than both of them in most practical applications, while it is given in a simple analytical form similar to that of the DCT. Furthermore, for the DOGHT algorithm there exist mathematical properties (orthogonality, Parseval relation, exact inverse, etc.) very similar to those of the DCT and this facilitates considerably its implementation.

Description

The Discrete Orthogonal Gauss-Hermite Transform - DOGHT is defined by the relations:

$$c_n = \sum_{i=0}^{N-1} w_i\, f\!\left(\frac{t_i}{T}\right) h_n(t_i) \qquad (1)$$

$$\widetilde{f}\!\left(\frac{t_i}{T}\right) = \sum_{n=0}^{N-1} c_n\, h_n(t_i) \qquad (2)$$

where T is a time scaling factor and

$$h_n(t) = \frac{1}{\left(2^n n!\sqrt{\pi}\right)^{1/2}} \exp\!\left(-\frac{t^2}{2}\right) H_n(t) \qquad (3)$$

are the normalised Gauss-Hermite functions.
Furthermore,

$$\int_{-\infty}^{+\infty} h_m(t)\, h_n(t)\, dt = \delta_{mn} \qquad (4)$$

is the continuous time orthogonality relation of the normalised Gauss-Hermite functions of order n : $h_n$ and $H_n$ are the classical Hermite polynomials of order n. The sampling points: $t_0 < t_1 < t_2 < K\ t_{N-1}$ are the zeroes of the Hermite polynomial of order N, well known from the Gauss quadrature approximate integration theory. The weights $w_i$ are given by the relation:

$$w_i = \frac{2}{\left[h_N(t_i)\right]'^2} \qquad (5)$$

The normalised Gauss-Hermite functions satisfy the following very important discrete orthogonality relations (discrete time orthogonality):

$$\sum_{i=0}^{N-1} w_i\, h_m(t_i)\, h_n(t_i) = \delta_{mn} \qquad (6)$$

$$\sum_{n=0}^{N-1} w_j\, h_n(t_i)\, h_n(t_j) = \delta_{ij} \qquad (7)$$

Because of equation (6) the transform coefficients $c_n$ are calculated by equation (1). Moreover, equation (7) leads to the relation:

$$\widetilde{f}\!\left(\frac{t_i}{T}\right) = f\!\left(\frac{t_i}{T}\right) \qquad (8)$$

which is a basic and very important property of the DOGHT transform (collocation property). The above properties are very similar to the properties of the Discrete Cosine Transform - DCT and the result of these properties is the existence of an <u>exact inverse</u> <u>DOGHT transform</u> at the points $t_i$ of the Hermite sampling distribution.

In order to facilitate comparison it is mentioned that the Discrete Cosine Transform - DCT is defined by the relations:

$$c_n = \frac{2\alpha}{N} \sum_{k=0}^{N-1} f(t_k)\cos\!\left[\frac{n\pi\left(k+1/2\right)}{N}\right] \qquad (9)$$

$$\widetilde{f}(t_k) = \sum_{n=0}^{N-1} \alpha\, c_n \cos\!\left[\frac{n\pi\left(k+1/2\right)}{N}\right] \qquad (10)$$

$$\alpha = \sqrt{1/2},\; n = 0$$

$$\alpha = 1,\; n > 0$$

The sampling point distribution is uniform and is given in the symmetrical interval

$$\left[-t_{\max},\, +t_{\max}\right]$$

from the relation:

$$t_k = -t_{max} + k\Delta t,\; \Delta t = \frac{2t_{max}}{N-1}$$

The existence of an exact inverse is also a property of the DCT transform:

$$\widetilde{f}(t_k) = f(t_k)$$

at the points $t_k$ of the uniform sampling.
The Parseval relation for the DOGHT transform is:

$$\widetilde{E} = \frac{1}{T} \sum_{n=0}^{N-1} |c_n|^2 = \frac{1}{T} \sum_{i=0}^{N-1} w_i \left| f\left(\frac{t_i}{T}\right) \right|^2 \qquad (11)$$

where $\widetilde{E}$ is the approximate signal energy. The exact signal energy is :

$$E = \int_{-\infty}^{+\infty} |f(t)|^2 \, dt \qquad (12)$$

The Parseval relation (11) is particularly useful: for the determination of the number of sampling points required for an accurate approximation of the signal energy, for the correct choice of the time scaling factor T, and in general for the estimation of the convergence rate of the transform.
The Parseval relation (11) reveals that in the case of the DOGHT transform the signal energy is approximated by a numerical integral (quadrature) of the Gauss-Hermite type while in the case of the DCT transform, as is well known from the DCT Parseval relation (13) the signal energy is approximated by a rectangle rule numerical integral:

$$\widetilde{E} = \frac{N \, \Delta t}{2} \sum_{n=0}^{N-1} |c_n|^2 = \Delta t \sum_{k=0}^{N-1} |f(t_k)|^2 \qquad (13)$$

It is also well known that the numerical integral of the Gauss-Hermite type converges much more rapidly than the simple rectangle rule in the vast majority of cases.
Concerning the choice of the time scaling factor T of the DOGHT transform, and in analogy with the DCT transform, we first choose a computational time window

$$\left[ -t_{\max}, t_{\max} \right]$$

according to the time duration of the processed signal. For the time scaling factor the following relation is proposed:

$$T = \frac{t_{N-1}}{t_{max}} \qquad (14)$$

where $t_{N-1}$ is the biggest zero of the Hermite polynomial according to the Gauss-Hermite quadrature theory. Thus, with this choice, the first sampling point: $\frac{t_0}{T} = -t_{max}$ and the last sampling point: $\frac{t_{N-1}}{T} = +t_{max}$ coincide with the borders of the computational time window

$$\left[ -t_{\max}, +t_{\max} \right].$$

In what follows, and in all the implementations of the method of the invention, we will use the above mentioned choice for the time scaling factor T.

Example 1

As an example we will calculate the DOGHT transform of the function $f(t) = \mathrm{sec}h(t)$ in the time window $t \in [-5, +5]$ using N = 8 points. The results are presented in Table 1. The inversely transformed function in the time domain is given by:

$$\widetilde{f}(t_i)=\sum_{n=0}^{N-1} c_n\, h_n(t_i\, T)\qquad\qquad (15)$$

The time scaling factor in this case is T = 0.586 and the approximate signal energy, as calculated by the coefficients of the DOGHT transform $c_n$ and the Parseval relation (11), is : $\widetilde{E}$ =1.97069 while the exact signal energy as calculated by relation (12) is : $E$=2. From Table 1 it is evident that the inverse DOGHT transform is exact and that in this case its odd coefficients are zero because of the even symmetry of the hyperbolic secant function. In Table 2 the respective results for the DCT transform are shown. It is seen that the DCT transform approximates less accurately the signal energy. However, the most important fact is that the DOGHT achieves much better concentration of signal energy in the lower order coefficients (lower "frequencies") and thus it can lead to better compression. For example, in the case of the zero order coefficient, we have $co$ = 0.39 for the DCT (DC coefficient) and $c_0$ = 1.06 for the DOGHT (coefficient of resemblance with the Gaussian function).

## Table 1. DOGHT – secht. $\widetilde{E}$=1.97069

| $i$ | $\dfrac{t_i}{T}$ | $f\left(\dfrac{t_i}{T}\right)$ | $c_i$ | $\widetilde{f}\left(\dfrac{t_i}{T}\right)$ |
|---|---|---|---|---|
| 0 | –5.00 | 0.01 | 1.06 | 0.01 |
| 1 | –3.38 | 0.07 | 0.00 | 0.07 |
| 2 | –1.97 | 0.27 | –0.18 | 0.27 |
| 3 | –0.65 | 0.82 | 0.00 | 0.82 |
| 4 | 0.65 | 0.82 | 0.10 | 0.82 |
| 5 | 1.97 | 0.27 | 0.00 | 0.27 |
| 6 | 3.38 | 0.07 | –0.03 | 0.07 |
| 7 | 5.00 | 0.01 | 0.00 | 0.01 |

**Table 2. DCT – secht.** $\widetilde{E} \approx 1.94486$

| $i$ | $\dfrac{t_i}{T}$ | $f\left(\dfrac{t_i}{T}\right)$ | $c_i$ | $\widetilde{f}\left(\dfrac{t_i}{T}\right)$ |
|---|---|---|---|---|
| 0 | -5.00 | 0.01 | 0.39 | 0.01 |
| 1 | -3.38 | 0.06 | 0.00 | 0.06 |
| 2 | -1.97 | 0.23 | -0.39 | 0.23 |
| 3 | -0.65 | 0.79 | 0.00 | 0.79 |
| 4 | 0.65 | 0.79 | 0.18 | 0.79 |
| 5 | 1.97 | 0.23 | 0.00 | 0.23 |
| 6 | 3.38 | 0.06 | -0.07 | 0.06 |
| 7 | 5.00 | 0.01 | 0.00 | 0.01 |

An important disadvantage of the DOGHT transform is that the sampling points required for its computation are not uniformly distributed, while in all practical applications the sampled signals are acquired through uniform sampling. In order to overcome this obstacle, it is proposed here, to use interpolation and more specifically linear or quadratic interpolation. In such a way, starting from the signal values at the uniformly sampled points we obtain through interpolation the signal values at the non-uniformly sampled points that are required for the computation of the DOGHT transform coefficients. This interpolation procedure introduces an additional error that is however negligible in most practical cases and is compensated rapidly by the faster convergence of the DOGHT.
The interpolation used is in the general case a Lagrange type interpolation, and more specifically for n = 2 points (linear interpolation):

$$f(t)=L_0(t)f(t_0)+L_1(t)f(t_1), \qquad L_0(t)=\frac{t-t_1}{t_0-t_1}, \qquad L_1(t)=\frac{t-t_0}{t_1-t_0} \qquad (16)$$

and for n = 3 points (quadratic interpolation) :

$$f(t)=L_0(t)f(t_0)+L_1(t)f(t_1)+L_2(t)f(t_2), \qquad L_0(t)=\frac{(t-t_1)(t-t_2)}{(t_0-t_1)(t_0-t_2)}, \qquad L_1(t)=\frac{(t-t_0)(t-t_2)}{(t_1-t_0)(t_1-t_2)},$$

$$L_2(t)=\frac{(t-t_0)(t-t_1)}{(t_2-t_0)(t_2-t_1)} \qquad (17)$$

Thus, the detailed steps followed by the compression method of this invention are:

(a) Input N signal level data from uniform sampling

$$f(t_k)$$

in the time interval

$$\left[-t_{\max}, t_{\max}\right]$$

(b) Computation of the time scaling factor: $T = \dfrac{t_{N-1}}{t_{max}}$

(c) Computation of the signal level

$$f\!\left(\frac{t_i}{T}\right)$$

at the N points: $\dfrac{t_i}{T}$ (where $t_i$ are the zeroes of the N-th order Hermite polynomial) through linear (16) or quadratic interpolation (17)

(d) Computation of the N coeffcients $c_n$ of the DOGHT transform by using relation (1)

(e) Retention of the N1<N coefficients $c_n$ in order to achieve N/N1 times compression.

Example 2

As an example we will compare the compression of the signal

$$f(t) = \exp\left(-\left|t\right|\right)$$

in the time window $t \in =[-5,+5]$ with N = 16 points from the DCT and the DOGHT with quadratic interpolation. In order to compare the two methods we will use the normalised rms error calculated at the points of the uniform sampling (PRD - Percent RMS Difference) :

$$PRD = 100 * \left[\frac{\sum_{k=0}^{N-1}\left[f(t_k) - \tilde{f}(t_k)\right]^2}{\sum_{k=0}^{N-1}\left[f(t_k)\right]^2}\right]^{1/2}$$

where $t_k$ are the points of the uniform sampling, and the maximum absolute error (PE - Peak amplitude Error):

$$PE = \max\{error\},$$

$$error = \left| f(t_k) - \tilde{f}(t_k)\right|$$

Table 3 represents the results of the compression of the two methods for compression ratios ranging from 1 : 1 to 4 :1. It is easily seen that the DOGHT transform achieves 4 :1 compression with less rms error (approximately 13 %) than the DCT transform rms error for only 2 :1 compression (approximately 14 %).

Tables 4 and 5 represent an extensive comparison of the two transforms. ff(tk) is the inverse transform calculated from the limited coefficients $c_n, n = 0, K, N1-1$, i.e. the reconstruction of the signal f(t) after decompression. It is also seen that the maximum absolute error PE is lower for the DOGHT, PE = 0.07, while PE = 0.08 for the DCT.

Table 3.

| Percent RMS error (PRD) | | |
|---|---|---|
| **N1** | **DCT** | **DOGHT** |
| 16 | 0.0 % | 1.22 % |
| 12 | 4.40% | 1.47% |

Table 3.   (continued)

| Percent RMS error (PRD) | | |
|---|---|---|
| **N1** | **DCT** | **DOGHT** |
| 8 | <u>14.29%</u> | 3.80 % |
| 4 | 43.37% | <u>12.91 %</u> |

Table 4.

| DCT method with 2:1 compression | | | | | |
|---|---|---|---|---|---|
| ----- DCT METHOD ----- | | | | | |
| ------- NDCT = 16, NDCT1 = 8, TMAX = 5.00 --------- | | | | | |
| k | tk | f (tk) | cn | ff (tk) | error |
| 1 | -5.000 | 0.007 | 0.259 | -0.016 | 0.02 |
| 2 | -4.333 | 0.013 | 0.000 | 0.030 | 0.02 |
| 3 | -3.667 | 0.026 | -0.273 | 0.057 | 0.03 |
| 4 | -3.000 | 0.050 | 0.000 | 0.039 | 0.01 |
| 5 | -2.333 | 0.097 | 0.149 | 0.052 | 0.04 |
| 6 | -1.667 | 0.189 | 0.000 | 0.196 | 0.01 |
| 7 | -1.000 | 0.368 | -0.084 | 0.451 | 0.08 |
| 8 | -0.333 | 0.717 | 0.000 | 0.658 | 0.06 |
| 9 | 0.333 | 0.717 | 0.049 | 0.658 | 0.06 |
| 10 | 1.000 | 0.368 | 0.000 | 0.451 | 0.08 |
| 11 | 1.667 | 0.189 | -0.029 | 0.196 | 0.01 |
| 12 | 2.333 | 0.097 | 0.000 | 0.052 | 0.04 |
| 13 | 3.000 | 0.050 | 0.017 | 0.039 | 0.01 |
| 14 | 3.667 | 0.026 | 0.000 | 0.057 | 0.03 |
| 15 | 4.333 | 0.013 | -0.008 | 0.030 | 0.02 |
| 16 | 5.000 | 0.007 | 0.000 | -0.016 | 0.02 |
| PRD = 14.29 | | | | | |
| PE = 0.08 | | | | | |

Table 5.

| DOGHT method with 4 :1 compression | | | | | |
|---|---|---|---|---|---|
| ----- DOGHT METHOD, TMAX = 5.00, T = 0.938 ----- | | | | | |
| i, k | tk | f(tk) | ti/T | f(ti/T) | cn | ff(ti/T) |
| 1 | -5.000 | 0.007 | -5.000 | 0.007 | 0.918 | 0.007 |
| 2 | -4.333 | 0.013 | -4.126 | 0.016 | 0.000 | 0.016 |
| 3 | -3.667 | 0.026 | -3.388 | 0.034 | -0.033 | 0.034 |
| 4 | -3.000 | 0.050 | -2.715 | 0.067 | 0.000 | 0.067 |
| 5 | -2.333 | 0.097 | -2.081 | 0.126 | 0.112 | 0.126 |
| 6 | -1.667 | 0.189 | -1.472 | 0.232 | 0.000 | 0.232 |
| 7 | -1.000 | 0.368 | -0.878 | 0.419 | -0.019 | 0.419 |
| 8 | -0.333 | 0.717 | -0.292 | 0.727 | 0.000 | 0.727 |
| 9 | 0.333 | 0.717 | 0.292 | 0.727 | 0.036 | 0.727 |
| 10 | 1.000 | 0.368 | 0.878 | 0.419 | 0.000 | 0.419 |
| 11 | 1.667 | 0.189 | 1.472 | 0.232 | -0.009 | 0.232 |
| 12 | 2.333 | 0.097 | 2.081 | 0.126 | 0.000 | 0.126 |

Table 5.   (continued)

| DOGHT method with 4 :1 compression | | | | | | |
|---|---|---|---|---|---|---|
| ----- DOGHT METHOD, TMAX = 5.00, T = 0.938 ----- | | | | | | |
| i, k | tk | f(tk) | ti/T | f(ti/T) | cn | ff(ti/T) |
| 13 | 3.000 | 0.050 | 2.715 | 0.067 | 0.013 | 0.067 |
| 14 | 3.667 | 0.026 | 3.388 | 0.034 | 0.000 | 0.034 |
| 15 | 4.333 | 0.013 | 4.126 | 0.016 | -0.002 | 0.016 |
| 16 | 5.000 | 0.007 | 5.000 | 0.007 | 0.000 | 0.007 |
| N1 = 4 | | | | | | |

| k | tk | ff(tk) | error |
|---|---|---|---|
| 1 | -5.000 | 0.000 | 0.01 |
| 2 | -4.333 | 0.000 | 0.01 |
| 3 | -3.667 | 0.001 | 0.02 |
| 4 | -3.000 | 0.008 | 0.04 |
| 5 | -2.333 | 0.049 | 0.05 |
| 6 | -1.667 | 0.183 | 0.01 |
| 7 | -1.000 | 0.436 | 0.07 |
| 8 | -0.333 | 0.670 | 0.05 |
| 9 | 0.333 | 0.670 | 0.05 |
| 10 | 1.000 | 0.436 | 0.07 |
| 11 | 1.667 | 0.183 | 0.01 |
| 12 | 2.333 | 0.049 | 0.05 |
| 13 | 3.000 | 0.008 | 0.04 |
| 14 | 3.667 | 0.001 | 0.02 |
| 15 | 4.333 | 0.000 | 0.01 |
| 16 | 5.000 | 0.000 | 0.01 |
| PRD = 12.91 | | | |
| PE = 0.07 | | | |

Example 3

As an example we will compare the compression of the signal

$$f(t) = \exp\left(-|t|\right) + 0.1*\left(random - 0.5\right)$$

in the time window $t \in [-5,+5]$ with N = 16 points from the DCT and the DOGHT with quadratic interpolation, where random are pseudo-random numbers in the interval $t \in [0,1]$. Table 6 represents the results of the compression of the two methods for compression ratios ranging from 1 :1 to 4 :1. It is easily seen, also in this case, that the DOGHT transform achieves 4 :1 compression with less rms error (approximately 17%) than the DCT transform rms error for only 2 :1 compression (approximately 18 %).
Tables 7 and 8 represent an extensive comparison of the two transforms. It is seen again in this case that the maximum absolute error PE is lower for the DOGHT, PE = 0.09, while PE = 0.10 for the DCT.

Table 6.

| Percent RMS error (PRD) | | |
|---|---|---|
| N1 | DCT | DOGHT |
| 16 | 0.0 % | 3.57 % |
| 12 | 7.73 % | 7.54 % |

Table 6.   (continued)

| Percent RMS error (PRD) | | |
|---|---|---|
| N1 | DCT | DOGHT |
| 8 | <u>17.72 %</u> | 10.54 % |
| 4 | 44.51 % | 16.75 % |

Table 7.

| DCT method with 2 :1 compression | | | | | |
|---|---|---|---|---|---|
| ----- DCT METHOD ----- | | | | | |
| ------- NDCT = 16, NDCT1 = 8, TMAX = 5.00 --------- | | | | | |
| k | tk | f(tk) | cn | ff(tk) | error |
| 1 | -5.000 | 0.038 | 0.260 | -0.006 | 0.04 |
| 2 | -4.333 | -0.021 | -0.005 | 0.030 | 0.05 |
| 3 | -3.667 | 0.016 | -0.259 | 0.047 | 0.03 |
| 4 | -3.000 | 0.080 | -0.011 | 0.030 | 0.05 |
| 5 | -2.333 | 0.057 | 0.150 | 0.056 | 0.00 |
| 6 | -1.667 | 0.232 | 0.007 | 0.210 | 0.02 |
| 7 | -1.000 | 0.358 | -0.073 | 0.460 | 0.10 |
| 8 | -0.333 | 0.719 | -0.004 | 0.646 | 0.07 |
| 9 | 0.333 | 0.685 | 0.052 | 0.630 | 0.06 |
| 10 | 1.000 | 0.340 | 0.014 | 0.425 | 0.09 |
| 11 | 1.667 | 0.168 | -0.029 | 0.186 | 0.02 |
| 12 | 2.333 | 0.128 | 0.023 | 0.053 | 0.07 |
| 13 | 3.000 | 0.027 | 0.022 | 0.040 | 0.01 |
| 14 | 3.667 | 0.023 | 0.001 | 0.061 | 0.04 |
| 15 | 4.333 | 0.061 | -0.015 | 0.049 | 0.01 |
| 16 | 5.000 | 0.027 | -0.017 | 0.020 | 0.01 |
| PRD = 17.72 | | | | | |
| PE = 0.10 | | | | | |

Table 8.

| DOGHT method with 4 :1 compression | | | | | |
|---|---|---|---|---|---|
| ----- DOGHT METHOD, TMAX = 5.00, T = 0.938 ----- | | | | | |
| i, k | tk | f(tk) | ti/T | f(ti/T) | cn | ff(ti/T) |
| 1 | -5.000 | 0.038 | -5.000 | 0.038 | 0.897 | 0.038 |
| 2 | -4.333 | -0.021 | -4.126 | -0.020 | 0.025 | -0.020 |
| 3 | -3.667 | 0.016 | -3.388 | 0.039 | -0.025 | 0.039 |
| 4 | -3.000 | 0.080 | -2.715 | 0.080 | -0.013 | 0.080 |
| 5 | -2.333 | 0.057 | -2.081 | 0.100 | 0.112 | 0.100 |
| 6 | -1.667 | 0.232 | -1.472 | 0.274 | -0.001 | 0.274 |
| 7 | -1.000 | 0.358 | -0.878 | 0.406 | -0.026 | 0.406 |
| 8 | -0.333 | 0.719 | -0.292 | 0.729 | 0.003 | 0.729 |
| 9 | 0.333 | 0.685 | 0.292 | 0.696 | 0.049 | 0.696 |
| 10 | 1.000 | 0.340 | 0.878 | 0.390 | -0.045 | 0.390 |
| 11 | 1.667 | 0.168 | 1.472 | 0.205 | 0.000 | 0.205 |
| 12 | 2.333 | 0.128 | 2.081 | 0.150 | -0.016 | 0.150 |

Table 8. (continued)

| DOGHT method with 4 :1 compression | | | | | | |
|---|---|---|---|---|---|---|
| ----- DOGHT METHOD, TMAX = 5.00, T = 0.938 ----- | | | | | | |
| i, k | tk | f(tk) | ti/T | f(ti/T) | cn | ff(ti/T) |
| 13 | 3.000 | 0.027 | 2.715 | 0.058 | 0.046 | 0.058 |
| 14 | 3.667 | 0.023 | 3.388 | 0.019 | 0.043 | 0.019 |
| 15 | 4.333 | 0.061 | 4.126 | 0.057 | 0.011 | 0.057 |
| 16 | 5.000 | 0.027 | 5.000 | 0.027 | -0.007 | 0.027 |
| N1 = 4 | | | | | | |

| k | tk | ff(tk) | error |
|---|---|---|---|
| 1 | -5.000 | 0.000 | 0.04 |
| 2 | -4.333 | 0.000 | 0.02 |
| 3 | -3.667 | 0.000 | 0.02 |
| 4 | -3.000 | 0.007 | 0.07 |
| 5 | -2.333 | 0.049 | 0.01 |
| 6 | -1.667 | 0.191 | 0.04 |
| 7 | -1.000 | 0.448 | 0.09 |
| 8 | -0.333 | 0.664 | 0.05 |
| 9 | 0.333 | 0.639 | 0.05 |
| 10 | 1.000 | 0.407 | 0.07 |
| 11 | 1.667 | 0.176 | 0.01 |
| 12 | 2.333 | 0.053 | 0.07 |
| 13 | 3.000 | 0.011 | 0.02 |
| 14 | 3.667 | 0.002 | 0.02 |
| 15 | 4.333 | 0.000 | 0.06 |
| 16 | 5.000 | 0.000 | 0.03 |
| PRD = 16.75 | | | |
| PE = 0.09 | | | |

Consequently, the conclusion drawn from the above simple examples is that the compression properties of the DOGHT transform are superior from these of the DCT transform and this for a wide variety of signals that include both deterministic and random signals. Thus, it can be predicted that the use of the DOGHT transform will lead to an important increase of the compression ratios of sound, picture, moving picture and biomedical signals and this at a computational complexity that is similar to the computational complexity of the DCT transform.

**Claims**

1. Method for the compression of signals using the Discrete Orthogonal Gauss-Hermite Transform - DOGHT and **characterised by** the following steps :

    (a) Input N signal level data from uniform sampling

$$f(t_k)$$

    in the time interval

$$\left[-t_{max}, t_{max}\right]$$

(b) Computation of the time scaling factor: $T = \dfrac{t_{N-1}}{t_{max}}$

(c) Computation of the signal level

$$f\left(\frac{t_i}{T}\right)$$

at the N points: $\dfrac{t_i}{T}$ (where $t_i$ are the zeroes of the N-th order Hermite polynomial) through linear or quadratic interpolation (bilinear or bi-quadratic interpolation in the case of 2-dimensional image transform)

(d) Computation of the N coefficients $c_n$ of the DOGHT transform

(e) Retention of the N1<N coefficients $c_n$ in order to achieve N/N1 times compression.

2. Integrated electronic circuit implementing the compression/decompression method of claim 1.

3. The compression method of claim 1 used for the replacement of the Discrete Cosine Transform - DCT.

4. The compression method of claim 1 used for the replacement of the Discrete Wavelet Transform - DWT.

5. Signal compression method according to claim 1 used for the compression of sound signals.

6. Signal compression method according to claim 1 used for the compression of still picture signals.

7. Signal compression method according to claim 1 used for the compression of moving picture signals.

8. Signal compression method according to claim 1 used for the compression of biomedical signals and more specifically of Electrocardiograms - ECGs.

9. Signal compression method according to claim 1 used for the compression of moving picture and sound signals following the MPEG norm (Moving Pictures Experts Group)/MP3 and replacing the DCT transform by the DOGHT transform.

10. Signal compression method according to claim 1 used for the compression of still pictures following the JPEG (Joint Photographic Experts Group) or JPEG2000 norm and replacing the DCT/DWT transform by the DOGHT transform.

# EP 1 406 212 A1

| | European Patent Office | EUROPEAN SEARCH REPORT | Application Number EP 03 38 6021 |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | GREENGARD L ET AL: "THE FAST GAUSS TRANSFORM" SIAM JOURNAL ON SCIENTIFIC AND STATISTICAL COMPUTING, PHILADELPHIA, PA, US, vol. 12, no. 1, January 1991 (1991-01), pages 79-94, XP001150371 ISSN: 0196-5204 --- | | G06T9/00 |
| A | BAXTER R J C ET AL: "A NEW ERROR ESTIMATE OF THE FAST GAUSS TRANSFORM" SIAM JOURNAL ON SCIENTIFIC COMPUTING, SOCIETY FOR INDUSTRIAL AND APPLIED MATHEMATICS, PHILADELPHIA,, US, vol. 24, no. 1, 2002, pages 257-259, XP001150372 ISSN: 1064-8275 --- | | |
| A | GREENGARD L ET AL.: "A NEW VERSION OF THE FAST GAUSS TRANSFORM" DOCUMENTA MATHEMATICA - EXTRA VOLUME ICM 1998, vol. 3, pages 575-584, XP002238954 ----- | | |
| | | | TECHNICAL FIELDS SEARCHED (Int.Cl.7) G06T |

The present search report has been drawn up for all claims

| Place of search THE HAGUE | Date of completion of the search 22 January 2004 | Examiner Pierfederici, A |
|---|---|---|

EPO FORM 1503 03.82 (P04C01)